# EUROPÄISCHE PATENTSCHRIFT

(11) **EP 1 500 429 B1**
(45) Veröffentlichungstag und Bekanntmachung des Hinweises auf die Patenterteilung: **04.03.2009**
(21) Anmeldenummer: 04017151.4
(22) Anmeldetag: 21.07.2004
(51) Int. Cl.: B01J 20/10, C11D 3/02, C11D 3/12, C11D 3/37

(54) **Adsorbat aus Schichtsilicat und seine Verwendung**
Adsorbate of layered silicate and its use
Adsorbat de silicate à couches et son utilisation

(30) Priorität: 25.07.2003 DE 10334047
(43) Veröffentlichungstag der Anmeldung: 26.01.2005
(73) Patentinhaber: Clariant Produkte (Deutschland) GmbH, 65929 Frankfurt am Main (DE)
(72) Erfinder: Bauer, Harald, Dr., 50170 Kerpen (DE); Schimmel, Guenther, Dr., 50374 Erftstadt (DE)

(56) Entgegenhaltungen:
- WO-A-99/57237
- WO-A-03/016444
- WO-A-03/104370

## Beschreibung

Die vorliegende Erfindung betrifft ein Adsorbat aus Schichtsilicat und seine Verwendung.

Nach EP-A-0 383 482 und PCT/WO 00/39259 ist die Korrosion von Glaswaren bei Reinigungs- und/oder Spülvorgängen in einer Geschirrspülmaschine ein seit langem bekanntes Problem. Zum einen beruht die Korrosion von Glaswaren offensichtlich auf dem Austreten von Mineralien aus der Glaszusammensetzung, begleitet von einer Hydrolyse des Silikat-Netzwerks. Zum anderen erfolgt eine Abscheidung von Silikatmaterial auf den Glaswaren. Beide Phänomene können bei mehrfachem Spülen in einer Geschirrspülmaschine zu Schädigungen der Glaswaren führen wie Trübung, Kratzer, Schillern (Irisieren), Schlieren oder dergleichen.

Nach EP-A-0 383 482 schützt Zink Glasgegenstände gegen Korrosion und ergibt Glaswaren, die über eine längere Zeitspanne ein klares Erscheinungsbild ergeben als solche, die nicht mit Zink behandelt wurden.

US-A-2,575,576 beschreibt, dass die Mischungen von Alkalimetallsalzen wie Natriumcarbonate, -phosphate, -silicate, oder -sulfate mit wasserlöslichen Zink- oder Aluminiumverbindungen unerwünschte Niederschläge bilden. Das Einbringen von löslichen Metallsalzen (Alkalialuminate, Zinkate oder Berylliate) in Maschinengeschirrreinigerformulierungen kann Ausfällungen von unlöslichem Material zur Folge haben, welche sehr unerwünscht sind und sich während des Spülgangs an Teilen von Geschirrspülmaschinen und Spülgut ablagern können.

EP-A-0 383 482 schlägt schwerlösliche Zinksalze wie Zinksilicat, Zinkcarbonat, Zinkoxid, basisches Zinkcarbonat (Zn₂(OH)₂CO₃), Zinkhydroxid, Zinkoxalat, Zinkmonophosphat (Zn₃(PO₄)₂) und Zinkpyrophosphat (Zn₂P₂O₇) vor. Nachteil dieses Standes der Technik ist, dass eine ausreichende und optimale Dosierung durch die geringe Löslichkeit der Zinksalze nur schwer sichergestellt werden kann. Außerdem kann es wegen der hohen Dichte der aufgeführten unlöslichen Zinkverbindungen zu Trennproblemen bei Pulvermischungen bzw. Abscheidung bei flüssigen Mischungen kommen.

WO 03/104370, WO 03/01644 und WO 99/57237 offenbaren Geschirrspülmittel.

Es bestand somit die Aufgabe ein vergleichsweise einfach zu dosierendes, gut lösliches Korrosionsschutzmittel insbesondere für Maschinengeschirrspülmitteln bereitzustellen, bei dem nicht die Gefahr der Bildung von unlöslichen Zinkniederschlägen auf der Oberfläche des Spülgutes besteht.

Diese Aufgabe wird gelöst durch ein Adsorbat, dadurch gekennzeichnet, dass es eine an kristallines Alkalischichtsilicat adsorbierte lösliche Zink-Verbindung einer Polycarbonsäure enthält.

Überraschend wurde gefunden, dass durch den Einsatz der auf einem kristallinen Schichtsilicat adsorbierten löslichen Zinkverbindung einer Polycarbonsäure die Ablagerungen auf Spülgut wirksam verhindert werden können. Dies ist ein wesentlicher Fortschritt gegenüber anderen löslichen Zinkverbindungen nach dem Stand der Technik.

Überraschend wurde gefunden, dass die erfindungsgemäße lösliche Zink-Verbindung einer Polycarbonsäure, wenn sie auf einem Alkalischichtsilicat adsorbiert ist, als Adsorbat bei Feuchtlagerung rieselfähig bleibt. Die Aufbringung auf kristallines Schichtsilicat und Agglomerierung zu einem granularen Produkt und die Tatsache, dass das Produkt auch bei der Einwirkung von Luftfeuchte rieselfähig bleibt ermöglicht die Herstellung von Wasch- und Reinigungsmitteln, insbesondere Maschinengeschirrspülmitteln auf besonders wirtschaftliche Art und Weise.

Bevorzugt enthält das Adsorbat 50 bis 99 Gew.-% kristallines Alkalischichtsilicat, 0,1 bis 40 Gew.-% Polycarbonsäure und 0,1 bis 20 Gew.-% Zink (als Element gerechnet).

Besonders bevorzugt enthält das Adsorbat 60 bis 95 Gew.-% kristallines Alkalischichtsilicat, 10 bis 30 Gew.-% Polycarbonsäure und 0,1 bis 10 Gew.-% Zink (als Element gerechnet).
Bevorzugt setzt sich die Polycarbonsäure zusammen aus 10 bis 70 Gew.-% Maleinsäure, 20 bis 85 Gew.-% Acrylsäure, 0 bis 10 Gew.-% Vinylacetat, 0 bis 10 Gew.-% weiteren Monomeren mit einem Neutralisierungsgrad von 0 bis 70.

Bevorzugt handelt es sich bei der Polycarbonsäure um nicht oder nur teilweise neutralisierte Homo- und/oder Copolymere aus Acrylsäure, Methacrylsäure, Maleinsäure, Polyasparaginsäure, Zuckercarbonsäure und/oder weiteren Monomeren.

Üblicherweise weist die Polycarbonsäure eine mittlere Molmasse von 1.000 bis 100.000 g/mol, bevorzugt von 2.000 bis 70.000 g/mol und besonders bevorzugt von 2.000 bis 35.000 g/mol auf.

Bevorzugt weist die eingesetzte Polycarbonsäure einen Neutralisationsgrad der Säuregruppen von 1 bis 100 %, bevorzugt von 10 bis 90 % und besonders bevorzugt von 30 bis 70 % auf.

Bevorzugt weist das Adsorbat einen pH-Wert von 8 bis 12, bei 2°C nach 10 min in 0,1 %iger wässriger Dispersion, auf.

Bevorzugt weist das Adsorbat eine Schüttdichte zwischen 400 und 800 g/l, besonders bevorzugt zwischen 400 und 700g/l auf.

Bevorzugt weist das Adsorbat einen Hunter-Weißgrad (Hunter-L-Wert) von 80 bis 100, besonders bevorzugt von 85 bis 95 auf.
Bevorzugt weist das Adsorbat einen Hunter-a-Wert von -1,5 bis +1,5, besonders bevorzugt von -0,8 bis 0 auf.

Bevorzugt weist das Adsorbat einen Hunter-b -Wert von 0 bis +2, besonders bevorzugt von 0,2 bis 1,5 auf.

Ein negativer Hunter-a-Wert zeigt eine Grüntönung an, ein positiver Hunter-a-Wert eine Rottönung. Ein negativer Hunter-b-Wert zeigt eine Blautönung an, ein positiver eine Gelbtönung.

Bevorzugt weist das Adsorbat eine Freisetzungsrate von0,0001 bis 12 g Zink*l⁻¹*h⁻¹, besonders bevorzugt von 0,0002 bis 2,4 g Zink *l⁻¹*h⁻¹ auf.

Die Erfindung betrifft auch ein Verfahren zur Herstellung eines Adsorbats, dadurch gekennzeichnet, dass man eine Lösung der löslichen Zink-Verbindung einer Polycarbonsäure in einem kornaufbauenden Mischer mit kristallinem Alkalischichtsilicat agglomeriert und danach trocknet.

Bevorzugt agglomeriert man bei 0 bis 200°C, einem Druck von 0,1 bis 100 bar und einer Zeitdauer von 0,01 h bis 1 h.

Ein anderes Verfahren zur Herstellung eines Adsorbats ist dadurch gekennzeichnet, dass man die lösliche Zink-Verbindung einer Polycarbonsäure durch Rollkompaktieren, Mahlen und Klassieren an kristallines Alkalischichtsilicat adsorbiert.

Ein weiteres Verfahren zur Herstellung eines Adsorbats ist dadurch gekennzeichnet, dass man die lösliche Zink-Verbindung einer Polycarbonsäure durch Wirbelbettaufbaugranulation an kristallines Alkalischichtsilicat adsorbiert.

Die Erfindung betrifft ebenfalls Verwendung der an Alkalischichtsilicat adsorbierten löslichen Zinkverbindung einer Polycarbonsäure in Wasch- und Reinigungsmitteln.

Schließlich betrifft die Erfindung auch Wasch- und Reinigungsmittel (Maschinengeschirrspülmittel), enthaltend
10 bis 90 Gew.-% Builder und Cobuilder
1 bis 90 Gew.-% pH-Regulatoren
0,1 bis 20 Gew.-% Bleiche
0 bis 10 Gew.-% grenzflächenaktive Substanzen
0,01 bis 10 Gew.-% erfindungsgemäßes Adsorbat.

Bevorzugt enthalten die Wasch- und Reinigungsmittel (Maschinengeschirrspülmittel)
20 bis 50 Gew.-% Builder und Cobuilder
10 bis 50 Gew.-% pH-Regulatoren
1 bis 20 Gew.-% Bleiche
0 bis 10 Gew.-% grenzflächenaktive Substanzen
0,1 bis 10 Gew.-% erfindungsgemäßes Adsorbat.

Alternativ enthalten die Wasch- und Reinigungsmittel (Vollwaschmittel)
10 bis 90 Gew.-% Builder und Cobuilder
1 bis 9 Gew.-% pH-Regulatoren
0,1 bis 50 Gew.-% grenzflächenaktive Stoffe
1 bis 10 Gew.-% Bleiche
0,1 bis 10 Gew.-% erfindungsgemäßes Adsorbat.

Andere Wasch- und Reinigungsmittel (Colorwaschmittel) enthalten
10 bis 90 Gew.-% Builder und Cobuilder
1 bis 9 Gew.-% pH-Regulatoren
0,1 bis 50 Gew.-% grenzflächenaktive Substanzen
0,1 bis 10 Gew.-% erfindungsgemäßes Adsorbat.

Bevorzugt ist ein mittlerer Teilchendurchmesser d50 von 200 bis 2000 µm, besonders bevorzugt von 300 bis 800 µm des Adsorbats.

Bevorzugt handelt es sich bei dem kristallinen Alkalischichtsilikat um kristallines schichtförmiges Alkalidisilicat der Formel x M₂O*y SiO₂*z H₂O mit einem Molverhältnis von SiO₂ zu M₂O von (1 bis 3,5) : 1 und z = 0 bis 4 und M = Na und/oder K, welches bis zu 10 Gew.-% an weiteren Elementen und/oder Verbindungen enthalten kann.

Bei den weiteren Elementen und/oder Verbindungen handelt es sich bevorzugt um Magnesium, Calcium, Zink, Aluminium, Lanthan, Zinn, Titan, Zirkonium, Mangan, Eisen und/oder deren Verbindungen.

Besonders bevorzugt handelt es sich bei dem alkalischen Silikat um eine kristallines schichtförmiges Natriumdisilikat.

Kristallines schichtförmiges Natriumdisilikat setzt sich aus wechselnden prozentualen Anteilen der polymorphen Phasen alpha, beta, delta und epsilon zusammen. In kommerziellen Produkten können auch röntgenamorphe Anteile enthalten sein.

Bevorzugte kristalline schichtförmige Natriumdisilikate haben eine Phasenzusammensetzung von 0 bis 40 Gew.- % an alpha-Natriumdisilikat, 0 bis 40 Gew.-% an beta-Natriumdisilikat, 40 bis 100 Gew.-% an delta-Natriumdisilikat und 0 bis 40 Gew.-% an amorphen Anteilen.

Besonders bevorzugte kristalline schichtförmige Natriumdisilikate haben eine Phasenzusammensetzung von 7 bis 21 Gew.- % an alpha-Natriumdisilikat, 0 bis 12 Gew.-% an beta-Natriumdisilikat und 65 bis 95 Gew.-% an delta-Natriumdisilikat. Insbesondere bevorzugt sind kristalline schichtförmige Natriumdisilicate mit einem Anteil von 80 bis 100 Gew.-% an delta-Na₂Si₂O₅.

In einer weiteren Ausführungsform können auch kristalline schichtförmige Natriumdisilicate mit einem Anteil von 80 bis 100 Gew.-% beta-Na₂Si₂O₅ verwendet werden.

Das vorgenannte alpha-Natriumdisilikat entspricht dem in der EP-B-0 164 514 beschriebenen Na-SKS-5, charakterisiert durch die dort wiedergegebenen Röntgenbeugungsdaten, die dem alpha-Na₂Si₂O₅ zugeordnet werden, dessen Röntgenbeugungsdiagramme beim Joint Committee on Powder Diffraction Standards mit den Nummern 18-1241, 22-1397, 22-1397A, 19-1233, 19-1234 und 19-1237 registriert sind.

Das vorgenannte beta-Natriumdisilikat entspricht dem in der EP-B-0 164 514 beschriebenen Na-SKS-7, charakterisiert durch die dort wiedergegebenen Röntgenbeugungsdaten, die dem beta-Na₂Si₂O₅ zugeordnet werden, dessen Röntgenbeugungsdiagramme beim Joint Commitee of Powder Diffraction Standards mit den Nummern 24-1123 und 29-1261 registriert sind.

Das vorgenannte delta-Natriumdisilikat entspricht dem in der EP-B-0 164 514 beschriebenen Na-SKS-6, charakterisiert durch die dort wiedergegebenen Röntgenbeugungsdaten, die dem delta-Na₂Si₂O₅ zugeordnet werden, dessen Röntgenbeugungsdiagramme beim Joint Commitee of Powder Diffraction Standards mit der Nummer 22-1396 registriert sind.

### Polycarbonsäure

Bevorzugt wird als saures Polyxcarboxylat ein nicht oder nur teilweise neutralisiertes Homo- und/oder Copolymer aus Acrylsäure, Methacrylsäure, Maleinsäure, Polyasparaginsäure, Zuckercarbonsäure und/oder weiteren Monomeren eingesetzt.

Hierzu gehören die Homopolymere der Acrylsäure oder der Methacrylsäure bzw. deren Copolymere mit weiteren ethylenisch ungesättigten Monomeren wie beispielsweise Acrolein, Dimethylacrylsäure, Ethylacrylsäure, Vinylessigsäure, Allylessigsäure, Maleinsäure, Fumarsäure, Itaconsäure, Meth(allysulfonsäure), Vinylsulfonsäure, Styrolsulfonsäure, Acrylamidomethylpropansulfonsäure, sowie Phosphorsäuregruppen enthaltende Monomere wie beispielsweise Vinylphosphonsäure, Allylphosphonsäure und Acrylamidomethylpropanphosphonsäure und deren Salze sowie Hydroxyethyl(meth)acrylatsulfate, Allylalkoholsulfate und -phosphate.

Die vorgenannten Polymerisate sind beispielsweise in der DE-A-23 57 036, DE-A-44 39 978, EP-A-0 075 820 und der EP-A-0 451 508 beschrieben.

Für die erfindungsgemäße Anwendung sind insbesondere biologisch abbaubare Terpolymere geeignet, die sich durch Polymerisation von
a) 10 bis 70 Gew.-% monoethylenisch ungesättigten Dicarbonsäuren mit 4 bis 8 C-Atomen bzw. deren Salze
b) 20 bis 85 Gew.-% monoethylenisch ungesättigten Monocarbonsäuren mit 3 bis 10 C-Atomen bzw. deren Salze
c) 1 bis 50 Gew.-% einfach ungesättigte Monomere, welche nach der Verseifung Hydroxylgruppen an der Polymerkette freisetzen
d) 0 bis 10 Gew.-% weiterer, radikalisch copolymerisierbarer Monomere, wobei die Summe der Monomeren nach a) bis d) 100 Gew.-% beträgt, in wässriger Lösung und Verseifung der Monomere nach c) erhalten lassen. Für die erfindungsgemäße Anwendung wird eine Verseifung im sauren Milieu bevorzugt. Produkte der vorstehend genannten Art sind in der DE-A-43 00 772 und in der DE-A-195 16 957 beschrieben.

Ebenfalls geeignet für die erfindungsgemäße Anwendung sind Pfropfpolymerisate von Monosacchariden, Oligosacchariden, Polysacchariden und modifizierten Polysacchariden, wie sie in der DE-A-40 03 172 und DE-A-44 15 623 beschrieben sind. Die in der EP-A-0 457 025 beschriebenen Pfropfpolymerisate mit Proteinen tierischen und pflanzlichen Ursprungs, insbesondere auch mit modifizierten Proteinen, sind ebenfalls für die erfindungsgemäße Anwendung gut geeignet.

Aus der Gruppe der Pfropfcopolymerisate werden bevorzugt Copolymerisate aus Zucker oder anderen Polyhydroxyverbindungen und einer Monomermischung der folgenden Zusammensetzung eingesetzt:
a) 45 bis 96 Gew.-% monoethylenisch ungesättigte C₃ bis C₁₀-Monocarbonsäure oder Mischungen von C₃ bis C₁₀-Monocarbonsäuren und/oder deren Salze mit einwertigen Kationen
b) 4 bis 55 Gew.-% monoethylenisch ungesättigte Monosulfonsäuregruppen enthaltende Monomere, monoethylenisch ungesättigte Schwefelsäureester, Vinylphosphonsäure und/oder die Salze dieser Säuren mit einwertigen Kationen
c) 0 bis 30 Gew.-% wasserlösliche, monoethylenisch ungesättigte Verbindungen, die mit 2 bis 50 Mol Alkylenoxid pro Mol monoethylenisch ungesättigter Verbindung modifiziert sind.

Solche Verbindungen werden in der DE-A-42 21 381 und in der DE-A-43 43 993 beschrieben.

Weitere geeignet Polymere sind Polyasparaginsäuren bzw. deren Derivate in nicht oder nur teilneutralisierter Form. Üblicherweise fallen die Polyasparaginsäuren in Form ihrer Alkalimetall- oder Ammoniumsalze an. Man kann hieraus die nicht oder nur teilneutralisierten Produkte durch Zugabe entsprechender Mengen organischer oder anorganischer Säuren und ggf. Abtrennung der entstehenden Salze gewinnen.

Solche Produkte lassen sich auch durch die thermische Umsetzung von Maleinsäure und Ammoniak oder durch die Kondensation von Asparaginsäure und die anschließende Hydrolyse des entstandenen Polysuccinimids erhalten. Die Herstellung solcher Produkte ist beispielsweise in der DE-A-36 26 672, DE-A-43 07 114, DE-A- 44 27 287, EP-A- 0 612 784, EP-A-0 644 257 und der PCT/WO 92/14753 beschrieben.

Besonders geeignet für die Herstellung der erfindungsgemäßen löslichen Zink-Verbindung einer Polycarbonsäure sind Pfropfpolymerisate von Acrylsäure, Methacrylsäure, Maleinsäure und weiteren ethylenisch ungesättigten Monomeren auf Salze der Polyasparaginsäure, wie sie üblicherweise bei der zuvor beschriebenen Hydrolyse des Polysuccinimids anfallen. Hierbei kann auf die sonst notwendige Zugabe von Säure zur Herstellung der nur teilneutralisierten Form der Polyasparaginsäure verzichtet werden. Die Menge an Polyaspartat wird üblicherweise so gewählt, dass der Neutralisationsgrad aller im Polymerisat eingebauter Carboxylgruppen 80%, vorzugsweise 60%, nicht überschreitet. Produkte der vorgenannten Art werden in der PCT/WO 94/01486 näher beschrieben.

Als bevorzugte Bereiche für die zuvor beschriebenen Polymere gelten:
Mittlere Molmasse: 1.000 bis 100.000 g/mol, bevorzugt 2.000 bis 70.000 g/mol und besonders bevorzugt 2.000 bis 35.000 g/mol.
Neutralisationsgrad der Säuregruppen: 0 bis 90 %, bevorzugt 30 bis 70 %.
Wassergehalt der Polymerlösungen: 30 bis 70 Gew.-%, bevorzugt 40 bis 60 Gew.-%.
Viskosität der Polymerlösungen: weniger als 2000 Pa*s bei 20°C.
Der pH-Wert der Polymerlösung sollte kleiner 5,5 sein.

Bevorzugt sind gut wasserlösliche Zinksalze wie z.B. Zinkhalogenide (Chloride, Bromide), Zinksalze der Oxosäuren der fünften, sechsten und siebten Hauptgruppe (Nitrate, Sulfate, Halogenite, Hypohalogenite, Halogenate, Perhalogenate), Zinksalze von Mono-, Di-, Oligo-, Polycarbonsäuren (Formiat, Acetat, Propionat, Butyrat, Benzoat, Salicylat, Milchsäure, Acrylsäure, Maleinsäure, Bernsteinsäure etc), von sauren Hydroxofunktionen (Phenolat etc) oder Zinksalze, die sich in saurem Polymer homogen lösen wie z.B. Zinkoxid (aktiviertes), Zinkoxidhydroxid, Zinkhydroxid, basisches Zinkcarbonat (Zinkhydroxidcarbonat), Zinkcarbonat. Weiterhin bevorzugt ist elementares Zink bevorzugt in Form von Barren, Granalien, Gries, Pulver, Staub.

Die lösliche Zinkverbindung einer Polycarbonsäure wird bevorzugt als Lösung eingesetzt. Hierzu wird eine Zinkverbindung mit der sauren Form der polymeren Carbonsäure (saures Polymer) gemischt.

### Lösliche Zink-Verbindung einer Polycarbonsäure.

Bevorzugt sind 1 bis 100 %, besonders bevorzugt 10 bis 90 % und insbesondere bevorzugt 30 bis 70 % der bindungsfähigen Carboxylfunktionen des Polycarboxylpolymers durch Zinkionen abgesättigt. Somit weist die eingesetzte Polycarbonsäure einen Neutralisationsgrad der Säuregruppen von 1 bis 100 %, bevorzugt von 10 bis 90 % und insbesondere bevorzugt von 30 bis 70 % auf.

Im Adsorbat dagegen geht der Neutralisationsgrad gegen 100 %.

Die lösliche Zink-Verbindung einer Polycarbonsäure enthält erfindungsgemäß 1 bis 40 Gew.-% Zn und 1 bis 50 Gew.-% Carbonsäuren (als CO₂ gerechnet), besonders bevorzugt 5 bis 30 Gew.-% Zn und 5 bis 40 Gew.-% Carbonsäuren (als CO₂ gerechnet).

Die Lösung der löslichen Zink-Verbindung einer Polycarbonsäure enthält erfindungsgemäß
1 bis 99 Gew.-% lösliche Zink-Verbindung einer Polycarbonsäure und besonders bevorzugt
10 bis 50 Gew.-% lösliche Zink-Verbindung einer Polycarbonsäure und
50 bis 90 Gew.-% Wasser.

Die Vermischung des Zinksalzes und des Polymers kann bei 0 bis 200°C, einem Druck von 0,1 bis 100 bar und einer Zeitdauer von 0,01 h bis 1 h erfolgen.

Die lösliche Zinkverbindung einer Polycarbonsäure wird bevorzugt in festem pulverförmigem Zustand eingesetzt.

Die Trocknung kann in einem Trockenschrank, Bandtrockner, etc erfolgen. Bevorzugt erfolgt die Trocknung durch Sprühtrocknung (z.B. in einem Sprüh-4trockner der Fa. Niro). Die Trocknung kann bei 0 bis 300°C, einem Druck von 0,0001 bis 100 bar und einer Zeitdauer von 0,01 h bis 10 h erfolgen.

Nach der Trocknung kann das Produkt gemahlen werden. Erfindungsgemäß einsetzbare Mühlen sind Schwingmühlen, Kugelmühlen, Walzen- und Pendelrollenmühlen (z.B. der Fa. Neumann & Esser), Hammermühlen, Prallmühlen oder Luftstrahlmühlen (z.B. der Fa. Hosokawa-Alpine).

Das Mahlgut wird klassiert in Überkorn, Gutkorn und Unterkorn, bevorzugt durch Sichtung und/oder Siebung. Besonders bevorzugt ist die Siebung. Geeignete Siebe sind z.B. solche der Firmen Rhewum, Locker, Allgeier.

Die lösliche Verbindung von Polycarboxylsäure und Zink, die an kristallines Schichtsilicat adsorbiert ist, wird bevorzugt als Agglomerat eingesetzt.

Bevorzugtes Verfahren zur Herstellung dieser Agglomerate besteht darin eine Lösung des erfindungsgemäßen löslichen Zink-Verbindung einer Polycarbonsäure in einem kornaufbauenden Mischer mit kristallinem Alkalischichtsilicat zu agglomerieren. Bevorzugt wird danach getrocknet.

Die Vermischung des Zinksalzes und des Polymers mit dem kristallinen Alkalischichtsilicat kann bei 0 bis 200°C, einem Druck von 0,1 bis 100 bar und einer Zeitdauer von 0,01 h bis 1 h erfolgen.

Geeignete kornaufbauende Mischer können sein: z.B. Lödige-Pflugscharmischer, Lödige CB-Ringspaltmischer, Papenmeier-Mischer, Henschel-Mischer, Eirichmischer, Schugi-Mischer.

Die Trocknung erfolgen, indem man gleichzeitig mit dem Mischen z.B. durch einen Gasstrom erhitzten Gases trocknet. Außerdem mit nachgeschaltetem Fließbetttrockner usw. Als erhitztes Gas ist bevorzugt, Wasserdampf, Luft, Stickstoff.

Die Trocknung kann bei 0 bis 300°C, einem Druck von 0,1 bis 100 bar und einer Zeitdauer von 0,01 h bis 1 h erfolgen.

Die Teilchengröße des zu agglomerierenden erfindungsgemäßen Alkalischichtsilicates ist bevorzugt 1 bis 2000 µm, besonders bevorzugt 10 bis 200 µm.

Eine weitere Ausführungsform für Herstellung der an Alkalischichtsilicat adsorbierte lösliche Zinkverbindung einer Polycarbonsäure sieht den Kornaufbau durch Rollkompaktieren, Mahlen und Klassieren vor.

Bevorzugt ist die Herstellung von Pressgranulaten (auf eine mittlere Korngröße von d₅₀ = 100 bis 800 µm). Zur Pressgranulierung können die Verfahren Rollkompaktierung, Brikettierung etc eingesetzt werden. Bei der Rollkompaktierung ist ein Pressdruck von 10 kN/cm bis 100 kN/cm bevorzugt und ein Pressdruck von 30 kN/cm bis 80 kN/cm besonders bevorzugt. Wahlweise können bis zu 10 Gew.-% Granulierhilfsmittel (Wasser, Wasserglas, Polyethylenglykol, nichtionische Tenside, anionische Tenside, Polycarboxylatcopolymer etc.) zugesetzt werden.

Eine weitere Ausführungsform für Herstellung der an Alkalischichtsilicat adsorbierte lösliche Zinkverbindung einer Polycarbonsäure sieht den Kornaufbau durch Wirbelbettaufbaugranulation vor (z.B. in einem Wirbelbettgranulator der Fa.

Inprotec). Bevorzugt wird dazu das Alkalischichtsilicat als Fließbettanteil vorgelegt und die lösliche Zink-Verbindung einer Polycarbonsäure aufgesprüht.

Die Granulierung kann bei 0 bis 300°C, einem Druck von 0,1 bis 100 bar und einer Zeitdauer von 0,01 h bis 1 h erfolgen.

Eine weitere Ausführungsform für ein Verfahren zur Herstellung der an Alkalischichtsilicat adsorbierte lösliche Zinkverbindung einer Polycarbonsäure sieht das Aufbringen von löslichem Zn-Salz in wässriger polymerfreier Lösung auf ein Agglomerat von Alkalischichtsilicat und Polycarbonsäure vor. Bevorzugt wird die Polycarbonsäure in einem Schugimischer mit Alkalischichtsilicat vermischt und in einem nachgeschalteten Fließbett agglomeriert und getrocknet. In einem weiteren Schritt wird eine Lösung von löslicher Zinkverbindung untergemischt und bevorzugt abermals getrocknet.

### Verwendung in Wasch- und Reinigungsmitteln

Erfindungsgemäß wird die an Alkalischichtsilicat adsorbierte lösliche Zinkverbindung einer Polycarbonsäure in flüssigen, festen, gelförmigen, geformten Wasch- und Reinigungsmitteln eingesetzt. Erfindungsgemäße Wasch- und Reinigungsmittel sind Maschinengeschirrreiniger, Handgeschirrreiniger, Vollwaschmittel, Kompaktwaschmittel, Ultrakompaktwaschmittel, Spezialwaschmittel (Color-Colorwaschmittel, Fleckensalze, Wasserenthärter).

### Verfahren zur Freisetzung einer löslichen Zink-Verbindung

Ein erfindungsgemäßes Verfahren zur Freisetzung einer löslichen Zink-Verbindung in Wasch- und Reinigungsmittel-Lösungen besteht darin, eine lösliche Zinkverbindung einer Polycarbonsäure mit einem Alkalischichtsilicat zu agglomerieren, mit den üblichen Wasch- und Reinigungsmittel-Inhaltsstoffen zu vermischen und in definierten Mengen in Leitungswasser oder deionisiertem Wasser zu lösen.

Das deionisierte Wasser wird im Falle von Maschinengeschirreinigern durch den eingebauten Ionentauscher aus Leitungswasser gewonnen.

Die Anwendungskonzentration an löslicher Zinkverbindung einer Polycarbonsäure ist bevorzugt 0,0001 g/l bis 0,2 g/l Zink, besonders bevorzugt 0,008 bis 0,03 g/l Zink. Die bevorzugte Lösegeschwindigkeit (Freisetzungsrate) ist 0,0001 bis 12 g Zink*l⁻¹*h⁻¹, besonders bevorzugt 0,0002 bis 2,4 g Zink *l⁻¹*h⁻¹.

### Builder und Cobuilder

Bei den Buildern für Geschirrreiniger handelt es sich bevorzugt um mono-, oligo- oder polymere oder copolymere Carbonsäuren, Alkaliortho-, Alkalipyro- und Alkalipolyphosphate (monomere, dimere, oligomere oder polymere Alkaliphosphate, vorzugsweise Pentaalkalitriphosphat, wasserfrei und/oder anhydratisiert und/oder Hexahydrat), kristalline Schichtsilikate,

Bei den Buildern für Waschmittel handelt es sich bevorzugt um kristalline Aluminosilikate (Zeolite, mono-, oligo- oder polymere oder copolymere Carbonsäuren, Alkaliortho-, Alkalipyro- und Alkalipolyphosphate (monomere, dimere, oligomere oder polymere Alkaliphosphate, vorzugsweise Pentaalkalitriphosphat, wasserfrei und/oder anhydratisiert und/oder Hexahydrat), kristalline Schichtsilikate.

Des weiteren kommen als erfindungsgemäßer Bestandteil organische Cobuilder wie Mono-. Di-, Tri-, Oligo- und/oder Polycarbonsäuren, Hydroxycarbonsäuren, Aminocarbonsäuren und Phosphonsäuren, vorzugsweise in Form ihrer wasserlöslichen Salze in Frage. Bevorzugte Oligocarbonsäuren sind Citronen-, Wein- und Maleinsäure usw.

### pH-Regulatoren

Alkalicarbonate (Soda) Alkalisesquicarbonate (Trona) Alkalihydrogencarbonate (Bicarbonat) kristalline Alkalisilikate ohne Schichtstruktur (Metasilicate) und/oder röntgenamorphe Alkalisilikate

### Grenzflächenaktiven Substanzen

Bei den grenzflächenaktiven Substanzen handelt es sich bevorzugt um anionische, kationische, nicht-ionische und/oder zwitterionische Tenside.

Als nichtionische Tenside sind Alkylalkoxylate, Gluconamide und Alkylpolyglycoside besonders bevorzugt.

Unter den Alkylalkoxylaten werden bevorzugt ethoxylierte Alkohole, bevorzugt primäre Alkohole, mit bevorzugt 8 bis 22 C Atomen und bevorzugt 1 bis 80 EO-Einheiten pro Mol Alkohol, eingesetzt, wobei der Alkoholrest linear oder bevorzugt in 2-Stellung methylverzweigt ist oder lineare und methylverzweigte Reste im Gemisch enthält, so wie dies üblicherweise in Oxoalkoholresten der Fall ist. Zu den bevorzugten ethoxylierten Alkoholen gehören beispielsweise C₁₁-Alkohole mit 3, 5, 7, 8 und 11 EO-Einheiten, (C₁₂-C₁₅)-Alkohole mit 3, 6, 7, 8, 10 bzw. 13 EO-Einheiten, (C₁₄-C₁₅)-Alkohole mit 4, 7 bzw. 8 EO-Einheiten, (C₁₆-C₁₈)-Alkohole mit 8, 11, 15, 20, 25, 50 bzw. 80 EO-Einheiten und Mischungen derselben. Die angegebenen Ethoxylierungsgrade stellen statistische Mittelwerte dar, die für ein spezielles Produkt eine ganze oder eine gebrochene Zahl sein können. Zusätzlich zu diesen können auch Fettalkohol-EO/PO-Addukte eingesetzt werden, wie z.B. die ®Genapol-Typen 3970, 2909 und 2822 der Fa. Clariant GmbH.
Weitere geeignete Tenside sind Polyhydroxyfettsäureamide der Formel R₂-CO-N(R₃)-Z, in der R₂CO für einen aliphatischen Acylrest mit 6 bis 22 Kohlenstoffatomen, R₃ für Wasserstoff, einen Alkyl oder Hydroxyalkylrest mit 1 bis 4 Kohlenstoffatomen und Z für einen linearen oder verzweigten Polyhydroxyalkylrest mit 3 bis 10 Kohlenstoffatomen und 3 bis 10 Hydroxylgruppen steht.

Bevorzugt können Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 Kohlenstoffatomen, bedeutet und G für eine Glykoseeinheit mit 5 oder 6 Kohlenstoffatomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Bevorzugt eingesetzt können alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind, oder vorzugsweise solche wie sie nach dem in der internationalen Patentanmeldung WO 90/13533 beschriebenen Verfahren hergestellt werden.

Als anionische Tenside vom Sulfonat-Typ kommen vorzugsweise die bekannten (C₉-C₁₃)-Alkylbenzolsulfonate, alpha-Olefinsulfonate und Alkansulfonate in Betracht. Geeignet sind auch Ester von Sulfofettsäuren bzw. die Disalze der alpha-Sulfofettsäuren. Weitere geeignete anionische Tenside sind sulfierte Fettsäureglycerinester, welche Mono-, Di- und Triester sowie deren Gemische darstellen, wie sie bei der Herstellung durch Veresterung durch 1 Mol Monoglycerin mit 1 bis 3 Mol Fettsäure oder bei der Umesterung von Triglyceriden mit 0,3 bis 2 Mol Glycerin erhalten werden. Als Alkylsulfate eignen sich insbesondere die Schwefelsäuremonoester der (C₁₂-C₁₈)-Fettalkohole, wie Lauryl-, Myristyl-, Cetyloder Stearylalkohol, und die aus Kokosöl, Palm- und Palmkernöl gewonnenen Fettalkoholgemische, die zusätzlich noch Anteile an ungesättigten Alkoholen, z.B. Oleylalkohol, enthalten können.

Als weitere anionische Tenside kommen insbesondere Seifen in Betracht. Geeignet sind gesättigte Fettsäureseifen, wie die Salze der Laurinsäure, Myristinsäure, Palmitinsäure, Stearinsäure, hydrierten Erucasäure und Behensäure, sowie insbesondere aus natürlichen Fettsäuren, z.B. Kokos-, Palmkern- oder Talgfettsäuren, abgeleitete Seifengemische. Die anionischen Tenside können in Form ihrer Natrium-, Kalium- oder Ammoniumsalze, sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze, vor.

Als Tenside sind chlorstabile Blockpolymerisate langkettiger aliphatischer Alkohole mit Ethylenoxid- oder Propylenoxidgruppen oder modifizierte Fettalkoholpolyglykolether oder Mono- und Di-alkylsulfate oder Alkansulfonate oder Aminoxide oder Fettsäuremethylpolyglykolester geeignet.

### Bleiche

Bei den Bleichsystemen handelt es sich bevorzugt um Aktivchlorträger wie Natriumdichlorisocyanurat oder Natriumhypochlorit-Lösung (Chlorbleichlauge) und/oder anorganische oder organische Aktivsauerstoffträger (wie Wasserstoffperoxid, Alkalimetallperoxide, Erdalkalimetallperoxide, Alkaliperborat, -persulfat, -percarbonat, -perphosphat sowie Percarbonsäuren und deren Salze wie Dodecanperoxiddicarbonsäure oder Magnesiumperoxiphtalat), Bleichaktivatoren (z.B. TAED), Bleichkatalysatoren (Komplexe des Mangans mit speziellen Liganden, z.B. Derivate des Triazacyclononans), Enzyme zur Entfernung von Verfärbungen, Perborate und/oder Percarbonate.

Schaum in Geschirrspülmaschinen, meistens hervorgerufen durch schaumproduzierende Tenside oder eiweißhaltige Speiserückstände bewirkt eine Verringerung der Reinigungsleistung. Bevorzugte Schaumdämpfer in Geschirreinigungsmitteln sind beispielweise chlorstabile Phosphorsäureester, wie z.B. Triisobutylphosphat (Entschäumer TIP der Clariant GmbH), oder bekannte Silikone wie die SP-Typen der Fa. Wacker Chemie GmbH. Besonders bevorzugt sind die bereits erwähnten ethoxyliert-propoxylierten Fettsäurealkylester (Genapol 2822®, Fa. Clariant).

Schließlich können die Wasch- und Reinigungsmittel gegebenenfalls noch Enzyme z.B. zur Faserpflege oder Schutzentfernung, Schaumdämpfer, Faserschutzmittel, Farbredepositionsinhibitoren, Soil-release-Polymere, Silberkorrosionsinhibitoren (ADD) enthalten.

Als Enzyme sind bevorzugt z.B. Protease, Amylase, Lipase, Cellulase enthalten.

### Verfahren zur Herstellung von Wasch- und Reinigungsmitteln

Ein bevorzugtes Verfahren zur Herstellung von Wasch- und Reinigungsmitteln ist ein Teil der festen Wasch- und Reinigungsmittel-Inhaltsstoffe in einen Mischer vorzulegen, die flüssigen Wasch- und Reinigungsmittel-Inhaltsstoffe aufzubringen und die verbleibenden festen Wasch- und Reinigungsmittel-Inhaltsstoffe nachzumischen (Trockenmischverfahren).

Bevorzugte Mischaggregate sind Pflugscharmischer, Freifallmischern, Zig-Zag-(Petterson Kelly)-Mischer, Ringspalt-Mischer.

Bevorzugt ist, die flüssigen Wasch- und Reinigungsmittel-Inhaltsstoffe zuzupumpen und/oder aufzusprühen. Bevorzugt eine Temperatur von 0 bis 200°C.

Bevorzugt ist, gleichzeitig einen auf 0 bis 400°C erhitzten Gasstrom einzuleiten und zu trocknen. Bevorzugtes Gas ist Luft, Stickstoff, Dampf.

Bevorzugt ist die Herstellung von Vormischungen von einzelnen Wasch- und Reinigungsmittel-Inhaltsstoffen durch Agglomerieren, Kompaktieren, Extrudieren.

### Allgemeine Vorschrift zur Herstellung der Maschinengeschirreiniger

In einem Pflugscharmischer der Fa. Lödige wurden die festen Komponenten, außer Enzyme, Bleiche und Parfüm, vorgelegt und gut gemischt. Dann wurde das Alkylethoxylat aufgesprüht. Enzyme, Parfüm und Bleichsystem wurden zum Schluss untergemischt.

Um den Einfluss von Geschirrspülmittel-Formulierungen auf das Aussehen von Spülgut, hier insbesondere von Gläsern zu prüfen, werden Dauertests in sog. Dauerläufern durchgeführt. Das sind spezielle Spülmaschinen, die über eine besondere Mechanik verfügen, welche das automatische Starten und Beenden von Spülcyclen ermöglicht. Gleichzeitig kann das Spülmittel automatisch dosiert werden, wobei ältere Typen für Pulver ausgelegt sind, neuere Maschinen aber auch Tabs automatisch dosieren können.

Die im Folgenden beschriebenen Ergebnisse wurden unter Verwendung von pulverförmigen Spülmitteln auf automatisch arbeitenden, sogenannten Glasprüfmaschinen generiert, die nach jedem Spülzyklus 30 Min. die Maschinentür öffnen, damit das Spülgut vollständig abtrocknet.

Zur Ermittlung der Korrosion wurden weitgehend die Prüfbedingungen des Normentwurfs zur DIN 50275 eingehalten. Diese Norm legt die Bedingungen fest, unter denen Spülgut, z.B. aus Glas, Keramik, Glaskeramik und Metall, im Hinblick auf sein Verhalten gegenüber den kombinierten chemischen, thermischen und mechanischen Einwirkungen beim Spülen in Haushaltsgeschirrspülmaschinen zu prüfen ist.

Das Füllgut der Maschinen bestand aus 12 Maßgedecken weißen Normporzellans, Edelstahlbestecken und als Prüfgut aus Gläsern verschiedener Provenienz, Zusammensetzung und Form (Kalknatron-, Bleikristall- und Kalikristallgläser). Gespült wurde bei 65°C Universalprogramm, einem Wasserverbrauch von 5 I/Spülgang und einer maschinenseitig überwachten Wasserhärte von <3°d. Dosiert wurden 20 g Reiniger und 3 ml Klarspüler.
Der Abtrag an der Glasoberfläche bis 500 Spülzyklen wurde bewertet und gewichtsmäßig erfasst.

### Abmusterung

Man bestimmt die Anzahl von Spülgängen nach denen erstmalig eine sichtbare Trübung auftritt.

| Note | Black Box |
|---|---|
| 0 | keine Trübung |
| 1 | sehr schwache Trübung/frisieren |
| 2 | schwache Trübung/Irisieren |
| 3 | deutliche Trübung |

Der arithmetische Mittelwert, gebildet aus der Summe der Bewertungen und Anzahl der Gläser, ergibt die Note für den eingetretenen Schaden.

### Beispiel 1

In einem Fünf-Liter-Becherglas werden bei 50°C unter Rühren 2233 g Zinksulfatheptahydrat in 1767 g Polymerlösung (55 Gew.-% Aktivsubstanz, nach EP-A-0 849 355) gelöst.

### Beispiel 2

In einem Fünf-Liter-Becherglas werden bei 100°C unter Rühren 124 g basisches Zinkcarbonat (ZnCO₃)₂*(Zn(OH)₂)₃ in 3876 g Polymerlösung (55 Gew.-% Aktivsubstanz, nach EP-A-0 849 355) gelöst.

### Beispiel 3

In einem Fünf-Liter-Becherglas werden bei 100°C unter Rühren 396 g Zinkpulver in 3604 g Polymerlösung (55 Gew.-% Aktivsubstanz, nach EP-A-0 849 355) gelöst.

### Beispiel 4 (Vergleich)

Von einer Lösung, die wie in Beispiel 1 hergestellt wurde, werden 500g bei 120°C im Trockenschrank getrocknet. Das getrocknete Material wird gemörsert und durch ein 250 µm-Sieb gesiebt. Eine Probe wird in einem Exsikkator bei 20°C über gesättigter Ammoniumsulfat-Lösung 5 Tage gelagert (80 % rH). Nach 5 Tagen ist die Probe zu einer klebrigen Flüssigkeit zerflossen.

### Beispiel 5 (Vergleich, amorphes Disilicat)

In einem Mischer der Fa. Schugi (Typ Flexomix 160) mit nachgeschaltetem Batch-Fließbett werden während einer Stunde 1875 kg amorphes Natriumdisilicat (80 % AS) mit 946 kg Polymerlösung (wie in Beispiel 1 hergestellt) miteinander vermischt und auf den gewünschten Feuchtegehalt nachgetrocknet (Lufteintrittstemperatur 150°C). Das Produkt wird mit einem Allgeier-Sieb durch ein 1200µm- Sieb und über ein 200 µm-Sieb abgesiebt. Das Produkt hat einen Natriumdisilicatgehalt von ca.
75 Gew.-%, einen Polymergehalt von ca. 18 Gew.-%, eine Restfeuchte ca.
7 Gew.-%, einen Zinkgehalt von ca. 6 % und eine mittlere Teilchengröße von 474 µm.

Eine Probe wird in einem Exsikkator bei 20°C über gesättigter Ammoniumsulfat-Lösung 5 Tage gelagert (80 % rH). Nach 5 Tagen ist die Probe zu einer klebrigen Flüssigkeit zerflossen.

### Beispiel 6 (erfindungsgemäß)

In einem Mischer der Fa. Schugi (Typ Flexomix 160) mit nachgeschaltetem Batch-Fließbett werden während einer Stunde 1500 kg kristallines schichtförmiges Natriumdisilicat (100 % AS; Phasenverteilung: 70 % delta-Natriumdisilicat, 20 % alpha-Natriumdisilicat, 5 % beta-Natriumdisilicat, 5 % röntgenamorphe Silicat-Anteile) mit 946 kg Polymerlösung (wie in Beispiel 1 hergestellt) miteinander vermischt und auf den gewünschten Feuchtegehalt nachgetrocknet (Lufteintrittstemperatur 150°C). Das Produkt wird mit einem Allgeier-Sieb durch ein 1200 µm- Sieb und über ein 200 µm-Sieb abgesiebt. Gleichzeitig leitet man einen Heißluftstrom ein und trocknet bis zum gewünschten Feuchtegehalt. Das Produkt hat einen Natriumdisilicatgehalt von ca. 75 Gew.-%, einen Polymergehalt von ca. 11,5 Gew.-%, eine Restfeuchte ca. 7 Gew.-%, einen Zinkgehalt von ca. 6 %, eine mittlere Teilchengröße von 474 µm und eine Schüttdichte von 550 g/l.
Eine Probe wird in einem Exsikkator bei 20°C über gesättigter Ammoniumsulfat-Lösung 5 Tage gelagert (80 % rH). Nach 5 Tagen ist die Probe ein rieselfähiges Pulver.

### Beispiel 7 (erfindungsgemäß)

In einem Lödige Pflugscharmischer werden 4350 g kristallines schichtförmiges Natriumdisilicat (100 % AS; Phasenverteilung: 70 % delta-Natriumdisilicat, 20 % alpha-Natriumdisilicat, 5 % beta-Natriumdisilicat, 5 % röntgenamorphe Silicat-Anteile) langsam mit 1205 g Polymerlösung (wie in Beispiel 1 hergestellt) besprüht. Gleichzeitig leitet man einen Heißluftstrom ein und trocknet bis zum gewünschten Feuchtegehalt. Das Produkt hat einen Natriumdisilicatgehalt von ca. 87 Gew.-%, einen Polymergehalt von ca. 6 Gew.-%, eine Restfeuchte ca. 4 Gew.-%, einen Zinkgehalt von ca. 3 % und eine mittlere Teilchengröße von ca. 260 µm.

Eine Probe wird in einem Exsikkator bei 20°C über gesättigter Ammoniumsulfat-Lösung 5 Tage gelagert (80 % rH). Nach 5 Tagen ist die Probe ein rieselfähiges Pulver.

### Beispiel 8 (erfindungsgemäß)

In einem Lödige Pflugscharmischer werden 3750 g kristallines schichtförmiges Natriumdisilicat (100 % AS; Phasenverteilung: 70 % delta-Natriumdisilicat, 20 % alpha-Natriumdisilicat, 5 % beta-Natriumdisilicat, 5 % röntgenamorphe Silicat-Anteile) langsam mit 1631 g Polymerlösung (wie in Beispiel 2 hergestellt) besprüht. Gleichzeitig leitet man einen Heißluftstrom ein und trocknet bis zum gewünschten Feuchtegehalt. Das Produkt hat einen Natriumdisilicatgehalt von ca. 75 Gew.-%, einen Polymergehalt von ca. 17,4 Gew.-%, eine Restfeuchte ca. 7 Gew.-%, einen Zinkgehalt von ca. 0,6 % und eine mittlere Teilchengröße von ca. 260 µm.

Eine Probe wird in einem Exsikkator bei 20°C über gesättigter Ammoniumsulfat-Lösung 5 Tage gelagert (80 % rH). Nach 5 Tagen ist die Probe ein rieselfähiges Pulver.

### Beispiel 9 (erfindungsgemäß)

In einem Lödige Pflugscharmischer werden 3750 g kristallines schichtförmiges Natriumdisilicat (100 % AS; Phasenverteilung: 70 % delta-Natriumdisilicat, 20 % alpha-Natriumdisilicat, 5 % beta-Natriumdisilicat, 5 % röntgenamorphe Silicat-Anteile) langsam mit 1515 g Polymerlösung (wie in Beispiel 3 hergestellt) besprüht. Gleichzeitig leitet man einen Heißluftstrom ein und trocknet bis zum gewünschten Feuchtegehalt. Das Produkt hat einen Natriumdisilicatgehalt von ca. 75 Gew.-%, einen Polymergehalt von ca. 15 Gew.-%, eine Restfeuchte ca. 7 Gew.-%, einen Zinkgehalt von ca. 3 Gew.-% und eine mittlere Teilchengröße von ca. 260 µm.

Eine Probe wird in einem Exsikkator bei 20°C über gesättigter Ammoniumsulfat-Lösung 5 Tage gelagert (80 % rH). Nach 5 Tagen ist die Probe ein rieselfähiges Pulver.

### Beispiel 10 (Vergleich)

Entsprechend der allgemeinen Vorschrift zur Herstellung von Maschinengeschirreinigern wird mit Produkt aus Beispiel 5 aus den in Tabelle 1 aufgeführten Inhaltsstoffen ein Maschinengeschirreiniger hergestellt. Der Zink-Gehalt beträgt 0,4 Gew.-%. Der Maschinengeschirreiniger wird nach der allgemeinen Vorschrift zur "Ermittlung der Korrosion an Gläsern" nach 500 Spülgängen bewertet. Die Ergebnisse sind in Tabelle 1 aufgeführt.

### Beispiel 11

Entsprechend der allgemeinen Vorschrift zur Herstellung von Maschinengeschirreinigern wird mit Produkt aus Beispiel 6 aus den in Tabelle 1 aufgeführten Inhaltsstoffen ein Maschinengeschirreiniger hergestellt. Der Zink-Gehalt beträgt 1 Gew.-%.

### Beispiel 12

Entsprechend der allgemeinen Vorschrift zur Herstellung von Maschinengeschirreinigern wird mit Produkt aus Beispiel 6 aus den in Tabelle 1 aufgeführten Inhaltsstoffen ein Maschinengeschirreiniger hergestellt. Der Zink-Gehalt beträgt 0,4 Gew.-%. Der Maschinengeschirreiniger wird nach der allgemeinen Vorschrift zur "Ermittlung der Korrosion an Gläsern" nach 500 Spülgängen bewertet. Die Ergebnisse sind in Tabelle 1 aufgeführt.

### Beispiel 13

Entsprechend der allgemeinen Vorschrift zur Herstellung von Maschinengeschirreinigern wird mit Produkt aus Beispiel 7 aus den in Tabelle 1 aufgeführten Inhaltsstoffen ein Maschinengeschirreiniger hergestellt. Der Zink-Gehalt beträgt 0,2 Gew.-%.

### Beispiel 14

Entsprechend der allgemeinen Vorschrift zur Herstellung von Maschinengeschirreinigern wird mit Produkt aus Beispiel 8 aus den in Tabelle 1 aufgeführten Inhaltsstoffen ein Maschinengeschirreiniger hergestellt. Der Zink-Gehalt beträgt 0,04 Gew.-%.

### Beispiel 15

Entsprechend der allgemeinen Vorschrift zur Herstellung von Maschinengeschirreinigern wird mit Produkt aus Beispiel 8 aus den in Tabelle 1 aufgeführten Inhaltsstoffen ein Maschinengeschirreiniger hergestellt. Der Zink-Gehalt beträgt 0,01 Gew.-%.

### Beispiel 16

Entsprechend der allgemeinen Vorschrift zur Herstellung von Maschinengeschirreinigern wird mit Produkt aus Beispiel 9 aus den in Tabelle 1 aufgeführten Inhaltsstoffen ein Maschinengeschirreiniger hergestellt. Der Zink-Gehalt beträgt 0,2 Gew.-%.

### Beispiel 17

Entsprechend der allgemeinen Vorschrift zur Herstellung von Maschinengeschirreinigern wird mit kommerziell zugänglichem SKS-6 HD (Fa. Clariant, Natriumdisilicatgehalt von ca. 75 Gew.-%, einen Polymergehalt von ca.
18 Gew.-%, eine Restfeuchte ca. 7 Gew.-%) aus den in Tabelle 1 aufgeführten Inhaltsstoffen ein Maschinengeschirreiniger hergestellt. Der Zink-Gehalt beträgt
0 Gew.-%. Der Maschinengeschirreiniger wird nach der allgemeinen Vorschrift zur "Ermittlung der Korrosion an Gläsern" nach 500 Spülgängen bewertet. Die Ergebnisse sind in Tabelle 1 aufgeführt.

**Tabelle 1: Zusammensetzung der Maschinengeschirreinigungsmittel**

| Beispiel | 10 | 11 | 12 | 13 | 14 | 15 | 16 | 17 |
|---|---|---|---|---|---|---|---|---|
| Produkt aus Bsp. 5 (Vgl.) | 6,7 | | | | | | | |
| Produkt aus Bsp. 6 (erfindungsgem.) | | 16,7 | 6,7 | | | | | |
| Produkt aus Bsp. 7 (erfindungsgem.) | | | | 6,7 | | | | |
| Produkt aus Bsp. 8 (erfindungsgem.) | | | | | 6,7 | 1,7 | | |
| Produkt aus Bsp. 9 (erfindungsgem.) | | | | | | | 6,7 | |
| SKS-6 HD | | | | | | | | 6,7 |
| Soda | 28 | 20,3 | 28 | 28 | 28 | 28 | 28 | 28 |
| Natriumsulfat | 2,3 | - | 2,3 | 2,3 | 2,3 | 7,3 | 2,3 | 2,3 |
| Natriumtripolyphosphat | 48 | 48 | 48 | 48 | 48 | 48 | 48 | 48 |
| Natriumperboratmonohydrat | 10 | 10 | 10 | 10 | 10 | 10 | 10 | 10 |
| Peractive CB | 2 | 2 | 2 | 2 | 2 | 2 | 2 | 2 |
| Enzyme | 1,5 | 1,5 | 1,5 | 1,5 | 1,5 | 1,5 | 1,5 | 1,5 |
| Genapol 2822 | 1,5 | 1,5 | 1,5 | 1,5 | 1,5 | 1,5 | 1,5 | 1,5 |
| Zinkgehalt | 0,402 | 1 | 0,402 | 0,2 | 0,04 | 0,01 | 0,2 | 0 |

| Gewichtsveränderung 500 Spülgänge [Promille] | | | | | | | | |
|---|---|---|---|---|---|---|---|---|
| Bleikristall | 1,1 | | -1,3 | | | | | -3,1 |
| Kalikristall | 1,3 | | -4 | | | | | -6,7 |

| Black Box Abmusterung | | | | | | | | |
|---|---|---|---|---|---|---|---|---|
| Bleikristall | 3 | 0 | 0 | 0 | 0 | 0 | 0 | 0 |
| Kalikristall | 3 | 0 | 0 | 0 | 0,5 | 0,5 | 0,5 | 0,5 |

## Patentansprüche

1. Adsorbat, **dadurch gekennzeichnet, dass** es eine an kristallines Alkalischichtsilicat adsorbierte lösliche Zink-Verbindung einer Polycarbonsäure enthält.

2. Adsorbat nach Anspruch 1, **dadurch gekennzeichnet, dass** es 50 bis 99 Gew.-% kristallines Alkalischichtsilicat, 0,1 bis 40 Gew.-% Polycarbonsäure und 0,1 bis 20 Gew.-% Zink, als Element gerechnet, enthält.

3. Adsorbat nach Anspruch 1 oder 2, **dadurch gekennzeichnet, dass** es 60 bis 95 Gew.-% kristallines Alkalischichtsilicat, 10 bis 30 Gew.-% Polycarbonsäure und 0,1 bis 10 Gew.-% Zink, als Element gerechnet, enthält.

4. Adsorbat nach einem oder mehreren der Ansprüche 1 bis 3, **dadurch gekennzeichnet, dass** sich die Polycarbonsäure zusammensetzt aus 10 bis 70 Gew.-% Maleinsäure, 20 bis 85 Gew.-% Acrylsäure, 0 bis 10 Gew.-% Vinylacetat, 0 bis 10 Gew.-% weiteren Monomeren mit einem Neutralisierungsgrad von 0 bis 70 %.

5. Adsorbat nach einem oder mehreren der Ansprüche 1 bis 4, **dadurch gekennzeichnet, dass** es sich bei der Polycarbonsäure um nicht oder nur teilweise neutralisierte Homo- und/oder Copolymere aus Acrylsäure, Methacrylsäure, Maleinsäure, Polyasparaginsäure, Zuckercarbonsäure und/oder weiteren Monomeren handelt.

6. Adsorbat nach einem oder mehreren der Ansprüche 1 bis 5, **dadurch gekennzeichnet, dass** die Polycarbonsäure eine mittlere Molmasse von 1.000 bis 100.000 g/mol, bevorzugt von 2.000 bis 70.000 g/mol und besonders bevorzugt von 2.000 bis 35.000 g/mol aufweist.

7. Adsorbat nach einem oder mehreren der Ansprüche 1 bis 6, **dadurch gekennzeichnet, dass** die eingesetzte Polycarbonsäure einen Neutralisationsgrad der Säuregruppen von 1 bis 100 %, bevorzugt von 10 bis 90 % und besonders bevorzugt von 30 bis 70 % aufweist.

8. Adsorbat nach einem oder mehreren der Ansprüche 1 bis 7, **dadurch gekennzeichnet, dass** es einen pH-Wert von 8 bis 12, bei 2°C nach 10 min in 0,1 %iger wässriger Dispersion, aufweist.

9. Adsorbat nach einem oder mehreren der Ansprüche 1 bis 8, **dadurch gekennzeichnet, dass** es eine Schüttdichte zwischen 400 und 800 g/l, bevorzugt zwischen 400 und 700g/l aufweist.

10. Adsorbat nach einem oder mehreren der Ansprüche 1 bis 9, **dadurch gekennzeichnet, dass** es einen Hunter-Weißgrad (Hunter-L-Wert) von 80 bis 100, bevorzugt von 85 bis 95 aufweist.

11. Adsorbat nach einem oder mehreren der Ansprüche 1 bis 10, **dadurch gekennzeichnet, dass** es einen Hunter-a-Wert von.-1,5 bis +1,5, bevorzugt von -0,8 bis 0 aufweist.

12. Adsorbat nach einem oder mehreren der Ansprüche 1 bis 11, **dadurch gekennzeichnet, dass** es einen Hunter-b -Wert von 0 bis +2, bevorzugt von 0,2 bis 1,5 aufweist.

13. Adsorbat nach einem oder mehreren der Ansprüche 1 bis 12, **dadurch gekennzeichnet, dass** es eine Freisetzungsrate von0,0001 bis 12 g Zink*l⁻¹*h⁻¹, bevorzugt von 0,0002 bis 2,4 g Zink *l⁻¹*h⁻¹ aufweist.

14. Verfahren zur Herstellung eines Adsorbats nach einem oder mehreren der Ansprüche 1 bis 13, **dadurch gekennzeichnet, dass** man eine Lösung der löslichen Zink-Verbindung einer Polycarbonsäure in einem kornaufbauenden Mischer mit kristallinem Alkalischichtsilicat agglomeriert und danach trocknet.

15. Verfahren nach Anspruch 14, **dadurch gekennzeichnet, dass** man bei 0 bis 200°C, einem Druck von 0,1 bis 100 bar und einer Zeitdauer von 0,01 h bis 1 h agglomeriert.

16. Verfahren zur Herstellung eines Adsorbats nach einem oder mehreren der Ansprüche 1 bis 13 **dadurch gekennzeichnet, dass** man die lösliche Zink-Verbindung einer Polycarbonsäure durch Rollkompaktieren, Mahlen und Klassieren an kristallines Alkalischichtsilicat adsorbiert.

17. Verfahren zur Herstellung eines Adsorbats nach einem oder mehreren der Ansprüche 1 bis 13 **dadurch gekennzeichnet, dass** man die lösliche Zink-Verbindung einer Polycarbonsäure durch Wirbelbettaufbaugranulation an kristallines Alkalischichtsilicat adsorbiert.

18. Verwendung der an Alkalischichtsilicat adsorbierten löslichen Zinkverbindung einer Polycarbonsäure in Wasch- und Reinigungsmitteln.

19. Wasch- und Reinigungsmittel, enthaltend
10 bis 90 Gew.-% Builder und Cobuilder
1 bis 90 Gew.-% pH-Regulatoren
0,1 bis 20 Gew.-% Bleiche
0 bis 10 Gew.-% grenzflächenaktive Substanzen
0,01 bis 10 Gew.-% Adsorbat nach mindestens einem der Ansprüche 1 bis 13.

20. Wasch- und Reinigungsmittel nach Anspruch 19 enthaltend,
20 bis 50 Gew.-% Builder und Cobuilder
10 bis 50 Gew.-% pH-Regulatoren
1 bis 20 Gew.-% Bleiche
0 bis 10 Gew.-% grenzflächenaktive Substanzen
0,1 bis 10 Gew.-% Adsorbat nach mindestens einem der Ansprüche 1 bis 13.

21. Wasch- und Reinigungsmittel, enthaltend
10 bis 90 Gew.-% Builder und Cobuilder
1 bis 9 Gew.-% pH-Regulatoren
0,1 bis 50 Gew.-% grenzflächenaktive Stoffe
1 bis 10 Gew.-% Bleiche
0,1 bis 10 Gew.-% Adsorbat nach mindestens einem der Ansprüche 1 bis 13.

22. Wasch- und Reinigungsmittel, enthaltend
10 bis 90 Gew.-% Builder und Cobuilder
1 bis 9 Gew.-% pH-Regulatoren
0,1 bis 50 Gew.-% grenzflächenaktive Substanzen
0,1 bis 10 Gew.-% Adsorbat nach mindestens einem der Ansprüche 1 bis 13.

## Claims

1. An adsorbate which comprises a soluble zinc compound of a polycarboxylic acid adsorbed on crystalline alkali metal phyllosilicate.

2. The adsorbate as claimed in claim 1, containing from 50 to 99% by weight of crystalline alkali metal phyllosilicate, from 0.1 to 40% by weight of polycarboxylic acid and from 0.1 to 20% by weight of zinc, calculated as the element.

3. The adsorbate as claimed in claim 1 or 2, containing from 60 to 95% by weight of crystalline alkali metal phyllosilicate, from 10 to 30% by weight of polycarboxylic acid and from 0.1 to 10% by weight of zinc, calculated as the element.

4. The adsorbate as claimed in one or more of claims 1 to 3, wherein the polycarboxylic acid is composed of from 10 to 70% by weight of maleic acid, from 20 to 85% by weight of acrylic acid, from 0 to 10% by weight of vinyl acetate and from 0 to 10% by weight of further monomers, with a degree of neutralization of from 0 to 70%.

5. The adsorbate as claimed in one or more of claims 1 to 4, wherein the polycarboxylic acid comprises homopolymers and/or copolymers of acrylic acid, methacrylic acid, maleic acid, polyaspartic acid, sugar carboxylic acid and/or further monomers, the polymers being non-neutralized or only partly neutralized.

6. The adsorbate as claimed in one or more of claims 1 to 5, wherein the polycarboxylic acid has an average molar mass of from 1000 to 100 000 g/mol, preferably from 2000 to 70 000 g/mol and more preferably from 2000 to 35 000 g/mol.

7. The adsorbate as claimed in one or more of claims 1 to 6, wherein the polycarboxylic acid employed has a degree of neutralization of the acid groups of from 1 to 100%, preferably from 10 to 90% and more preferably from 30 to 70%.

8. The adsorbate as claimed in one or more of claims 1 to 7, having a pH of from 8 to 12, at 2°C after 10 min in 0.1 % aqueous dispersion.

9. The adsorbate as claimed in one or more of claims 1 to 8, having a bulk density of between 400 and 800 g/l, more preferably between 400 and 700 g/l.

10. The adsorbate as claimed in one or more of claims 1 to 9, having a Hunter whiteness (Hunter L value) of from 80 to 100, more preferably from 85 to 95.

11. The adsorbate as claimed in one or more of claims 1 to 10, having a Hunter a value of from -1.5 to +1.5, more preferably from -0.8 to 0.

12. The adsorbate as claimed in one or more of claims 1 to 11, having a Hunter b value of from 0 to +2, more preferably from 0.2 to 1.5.

13. The adsorbate as claimed in one or more of claims 1 to 12, having a release rate of from 0.0001 to 12 g zinc*l⁻¹*h⁻¹, more preferably from 0.0002 to 2.4 g zinc*l⁻¹*h⁻¹.

14. A process for preparing an adsorbate as claimed in one or more of claims 1 to 13, which comprises agglomerating a solution of the soluble zinc compound of a polycarboxylic acid with crystalline alkali metal phyllosilicate in a granule-building mixer and then drying the agglomerate.

15. The process as claimed in claim 14, wherein agglomeration is carried out at from 0 to 200°C under a pressure of from 0.1 to 100 bar for a time of from 0.01 h to 1 h.

16. A process for preparing an adsorbate as claimed in one or more of claims 1 to 13, which comprises adsorbing the soluble zinc compound of a polycarboxylic acid onto crystalline alkali metal phyllosilicate by roll compacting, grinding and classifying.

17. A process for preparing an adsorbate as claimed in one or more of claims 1 to 13, which comprises adsorbing the soluble zinc compound of a polycarboxylic acid onto crystalline alkali metal phyllosilicate by fluid-bed size-enlargement granulation.

18. The use of a soluble zinc compound of a polycarboxylic acid adsorbed on alkali metal phyllosilicate in laundry detergents and other detergents.

19. A laundry detergent or other detergent containing
from 10 to 90% by weight of builders and cobuilders
from 1 to 90% by weight of pH regulators
from 0.1 to 20% by weight of bleach
from 0 to 10% by weight of surface-active substances
from 0.01 to 10% by weight of adsorbate as claimed in at least one of claims 1 to 13.

20. The detergent as claimed in claim 19, containing
from 20 to 50% by weight of builders and cobuilders
from 10 to 50% by weight of pH regulators
from 1 to 20% by weight of bleach
from 0 to 10% by weight of surface-active substances
from 0.1 to 10% by weight of adsorbate as claimed in at least one of claims 1 to 13.

21. A laundry detergent or other detergent containing
from 10 to 90% by weight of builders and cobuilders
from 1 to 9% by weight of pH regulators
from 0.1 to 50% by weight of surface-active substances
from 1 to 10% by weight of bleach
from 0.1 to 10% by weight of adsorbate as claimed in at least one of claims 1 to 13.

22. A laundry detergent or other detergent containing
from 10 to 90% by weight of builders and cobuilders
from 1 to 9% by weight of pH regulators
from 0.1 to 50% by weight of surface-active substances
from 0.1 to 10% by weight of adsorbate as claimed in at least one of claims 1 to 13.

## Revendications

1. Produit d'adsorption, **caractérisé en ce qu'**il contient un composé soluble contenant du zinc d'un poly(acide carboxylique), adsorbé sur un silicate lamellaire alcalin cristallin.

2. Produit d'adsorption selon la revendication 1, **caractérisé en ce qu'**il contient de 50 à 99 % en poids de silicate lamellaire alcalin cristallin, de 0,1 à 40 % en poids de poly(acide carboxylique) et de 0,1 à 20 % en poids de zinc en tant qu'élément.

3. Produit d'adsorption selon la revendication 1 ou 2, **caractérisé en ce qu'**il contient de 60 à 95 % en poids de silicate lamellaire alcalin cristallin, de 10 à 30 % en poids de poly(acide carboxylique) et de 0,1 à 10 % en poids de zinc en tant qu'élément.

4. Produit d'adsorption selon une ou plusieurs des revendications 1 à 3, **caractérisé en ce que** le poly(acide carboxylique) est composé de 10 à 70 % en poids d'acide maléique, 20 à 85 % en poids d'acide acrylique, 0 à 10 % en poids d'acétate de vinyle, 0 à 10 % en poids d'autres monomères ayant un degré de neutralisation de 0 à 70 %.

5. Produit d'adsorption selon une ou plusieurs des revendications 1 à 4, **caractérisé en ce que** le poly(acide carboxylique) consiste en des homo et/ou copolymères, non neutralisés ou seulement partiellement neutralisés, d'acide acrylique, d'acide méthacrylique, d'acide maléique, de poly(acide aspartique), d'acide saccharique et/ou d'autres monomères.

6. Produit d'adsorption selon une ou plusieurs des revendications 1 à 5, **caractérisé en ce que** le poly(acide carboxylique) a une masse moléculaire moyenne de 1 000 à 100 000 g/mole, de préférence de 2 000 à 70 000 g/mole et de façon particulièrement préférée de 2 000 à 35 000 g/mole.

7. Produit d'adsorption selon une ou plusieurs des revendications 1 à 6, **caractérisé en ce que** le poly(acide carboxylique) utilisé présente un degré de neutralisation des groupes acides de 1 à 100 %, de préférence de 10 à 90 % et de façon particulièrement préférée de 30 à 70 %.

8. Produit d'adsorption selon une ou plusieurs des revendications 1 à 7, **caractérisé en ce qu'**il présente un pH de 8 à 12, à 2 °C après 10 minutes en dispersion aqueuse à 0,1 %.

9. Produit d'adsorption selon une ou plusieurs des revendications 1 à 8, **caractérisé en ce qu'**il présente une densité apparente comprise entre 400 et 800 g/l, de préférence entre 400 et 700 g/l.

10. Produit d'adsorption selon une ou plusieurs des revendications 1 à 9, **caractérisé en ce qu'**il présente un degré de blancheur Hunter (valeur Hunter L) de 80 à 100, de préférence de 85 à 95.

11. Produit d'adsorption selon une ou plusieurs des revendications 1 à 10, **caractérisé en ce qu'**il présente une valeur Hunter a de -1,5 à +1,5, de préférence de -0,8 à 0.

12. Produit d'adsorption selon une ou plusieurs des revendications 1 à 11, **caractérisé en ce qu'**il présente une valeur Hunter b de 0 à +2, de préférence de 0,2 à 1,5.

13. Produit d'adsorption selon une ou plusieurs des revendications 1 à 12, **caractérisé en ce qu'**il présente une vitesse de libération de 0,0001 à 12 g de zinc*l⁻¹*h⁻¹, de préférence de 0,0002 à 2,4 g de zinc*l⁻¹*h⁻¹.

14. Procédé pour la préparation d'un produit d'adsorption selon une ou plusieurs des revendications 1 à 13, **caractérisé en ce qu'**on agglomère dans un mélangeur granulateur une solution du composé soluble contenant du zinc d'un poly(acide carboxylique) avec un silicate lamellaire alcalin cristallin et ensuite on la sèche.

15. Procédé selon la revendication 14, **caractérisé en ce qu'**on effectue l'agglomération à une température de 0 à 200 °C, sous une pression de 0,1 à 100 bars et pendant une durée de 0,01 heure à 1 heure.

16. Procédé pour la préparation d'un produit d'adsorption selon une ou plusieurs des revendications 1 à 13, **caractérisé en ce qu'**on effectue l'adsorption du composé soluble contenant du zinc d'un poly(acide carboxylique) sur le silicate lamellaire alcalin cristallin par compactage au rouleau, broyage et classification.

17. Procédé pour la préparation d'un produit d'adsorption selon une ou plusieurs des revendications 1 à 13, **caractérisé en ce qu'**on effectue l'adsorption du composé soluble contenant du zinc d'un poly(acide carboxylique) sur le silicate lamellaire alcalin cristallin par granulation par recouvrement en lit fluidisé.

18. Utilisation d'un composé soluble contenant du zinc d'un poly(acide carboxylique), adsorbé sur un silicate lamellaire alcalin, dans des produits de lavage et de nettoyage.

19. Produit de lavage et de nettoyage, contenant 10 à 90 % en poids d'adjuvant actif de détergence et de co-adjuvant actif de détergence
1 à 90 % en poids de régulateurs de pH
0,1 à 20 % en poids d'agent de blanchiment
0 à 10 % en poids de substances tensioactives
0,01 à 10 % en poids de produit d'adsorption selon au moins l'une des revendications 1 à 13.

20. Produit de lavage et de nettoyage selon la revendication 19, contenant 20 à 50 % en poids d'adjuvant actif de détergence et de co-adjuvant actif de détergence
10 à 50 % en poids de régulateurs de pH
1 à 20 % en poids d'agent de blanchiment
0 à 10 % en poids de substances tensioactives
0,1 à 10 % en poids de produit d'adsorption selon au moins l'une des revendications 1 à 13.

21. Produit de lavage et de nettoyage, contenant 10 à 90 % en poids d'adjuvant actif de détergence et de co-adjuvant actif de détergence
1 à 9 % en poids de régulateurs de pH
0,1 à 50 % en poids de substances tensioactives
1 à 10 % en poids d'agent de blanchiment
0,1 à 10 % en poids de produit d'adsorption selon au moins l'une des revendications 1 à 13.

22. Produit de lavage et de nettoyage, contenant 10 à 90 % en poids d'adjuvant actif de détergence et de co-adjuvant actif de détergence
1 à 9 % en poids de régulateurs de pH
0,1 à 50 % en poids de substances tensioactives
0,1 à 10 % en poids de produit d'adsorption selon au moins l'une des revendications 1 à 13.
